(19) Europäisches Patentamt
European Patent Office
Office européen des brevets

(11) **EP 3 220 535 B1**

(12) **EUROPEAN PATENT SPECIFICATION**

(45) Date of publication and mention
of the grant of the patent:
**25.08.2021 Bulletin 2021/34**

(51) Int Cl.:
**H02P 6/18** *(2016.01)* **H02P 21/00** *(2016.01)*

(21) Application number: **16161142.1**

(22) Date of filing: **18.03.2016**

(54) **IDENTIFICATION OF SYNCHRONOUS INDUCTANCES OF A SYNCHRONOUS SALIENT POLE MACHINE**

IDENTIFIZIERUNG VON SYNCHRONEN INDUKTANZEN EINER SYNCHRONEN MASCHINE MIT SCHENKELPOLEN

IDENTIFICATION D'INDUCTANCES SYNCHRONES D'UNE MACHINE À PÔLES SAILLANTS SYNCHRONE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.09.2017 Bulletin 2017/38**

(73) Proprietor: **ABB Schweiz AG**
**5400 Baden (CH)**

(72) Inventors:
• **Piippo, Antti**
**00380 Helsinki (FI)**
• **Heikkilä, Joni**
**00380 Helsinki (FI)**
• **Eskola, Matti**
**00380 Helsinki (FI)**

(74) Representative: **Kolster Oy Ab**
**(Salmisaarenaukio 1)**
**P.O. Box 204**
**00181 Helsinki (FI)**

(56) References cited:
**EP-A1- 2 453 248** **WO-A1-2004/023639**
**US-A1- 2014 084 822** **US-B1- 6 401 875**

• **SCHRÖDL M AND STEFAN T: "New rotor position detector for permanent magnet synchronous machines using the inform-method", EUROPEAN TRANSACTIONS ON ELECTRICAL POWER, WILEY, GB , vol. 1, no. 1 1 January 1991 (1991-01-01), pages 47-53, XP002729234, ISSN: 1430-144X, DOI: 10.1002/ETEP.4450010110 Retrieved from the Internet: URL:http://onlinelibrary.wiley.com/doi/10. 1002/etep.4450010110/abstract [retrieved on 2014-09-03]**
• **None**

**Description**

FIELD OF THE INVENTION

The present invention relates to estimating parameters of a rotating electrical machines, and particularly to estimating inductances of a synchronous salient pole machine.

BACKGROUND OF THE INVENTION

Synchronous salient pole machines, such as permanent magnet synchronous machines and synchronous reluctance machines, are gaining popularity due to simple construction and relatively low costs.

Rotating electrical machines are typically controlled using a frequency converter, and for the controlled operation information regarding electrical behaviour of the machine is required. Such information is fed to the controller of the frequency converter in form of electrical parameters of the machine. In connection with synchronous salient pole machines required parameters include the stator inductance which varies depending on the rotor angle and on the angle of the voltage fed to the stator of the machine.

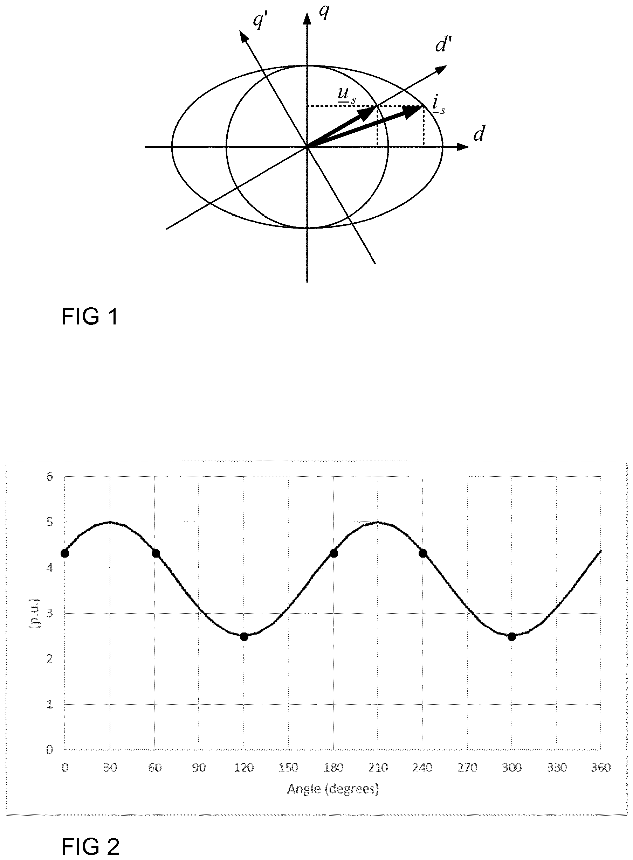

When voltage is fed to a salient pole machine, the change rate of stator current depends on the angle of the voltage and on the rotor angle. This is illustrated in Figure 1 in which the inductance has its minimum value in direction d and its maximum in direction $q$. Voltage vector us is supplied to the motor in direction d' and the resulting current vector in the stator is shown as is having a direction differing from the direction of the voltage vector.

For saving costs frequency converters can be made with only one output current measurement instead of measuring all the output phase currents. When only one current measurement is employed, the current of the intermediate voltage circuit is measured either in the positive or in the negative bus. The controller of the frequency converter is able to determine to which output phase the measured current belongs to as the state of the output switches is known. The output current flows through the buses of the intermediate voltage circuit and the control of the frequency converter can be based on the measured value the current. In a frequency converter or inverter having three output phases, when one upper switch component is conducting, the measured current belongs to the phase in which the upper switch is conducting. When a lower switch component is conducting, the measured current is a negative current in the phase in which the lower component conducts. Further, as the sum of the phase currents is zero, one measured current is sufficient for operating the frequency converter or inverter.

In a frequency converter or inverter with current measurements from each output phase the identification of machine inductances is comparatively easy as the current response to a voltage can be measured precisely. However, when only the intermediate circuit current is measured, the measured current is only the projection of the current vector to the supplied voltage vector, that is, only the current component in the direction of the supplied voltage vector can be measured.

To overcome this problem relating to identification of inductances in a frequency converter with intermediate voltage circuit current measurement, the rotor of the machine could be turned by feeding DC voltage to the machine such that the rotor would be in a known position. However, the turning of the rotor might not be possible due to mechanics connected to the shaft of the rotor. Further, the rotor might not turn in the direction of current depending on the parameters of the salient pole machine. Also the slots of the machine may turn the rotor of a permanent magnet machine prior to the identification of the inductances leading to unreliable results.

Document US2014/0084822 A1 discloses a control device for rotary machine and specifically discloses estimating the rotor position of the rotary machine in a stopped state.

Document WO2004/023639 A1 discloses to use a single current measurement sensor in determining phase inductances of a brushless motor.

BRIEF DESCRIPTION OF THE INVENTION

An object of the present invention is to provide a method, an apparatus and a computer program product so as to overcome the above problems. The objects of the invention are achieved by a method, an apparatus and a computer program product which are characterized by what is stated in the independent claims 1, 5 and 6. The preferred embodiments of the invention are disclosed in the dependent claims.

The invention is based on using a voltage pulse test sequence in which voltage pulses are applied to the salient pole machine in different directions and in the realization that the measured currents can be used in obtaining inverse values of machine inductances. The obtained inverse values vary in a sinusoidal manner as a function of the electrical angle of the rotor, and the minimum and the maximum values of the sinusoidally varying waveform represent the synchronous inductances of the machine.

An advantage of the method of the invention is that the identification of required parameters can be made without rotating the rotor and only with one output current measurement. Further, the method is implemented in a frequency converter without any separate measurement instruments. The method can be carried out in a short time period before the start of the control of the salient pole machine. The method may be implemented in identification procedure carried out automatically before first start of the frequency converter.

BRIEF DESCRIPTION OF THE DRAWINGS

In the following the invention will be described in greater detail by means of preferred embodiments with reference to the accompanying drawings, in which

Figure 1 is shows voltage and current vectors when the angle of the rotor is not known;
Figure 2 shows an example of inverse values of inductances;
Figure 3 shows a simplified structure of an inverter of a frequency converter; and
Figure 4 shows voltage vectors obtained with the inverter of Figure 3.

DETAILED DESCRIPTION OF THE INVENTION

In the following a salient pole synchronous motor is analysed mathematically for clarifying the operation of the invention and for better understanding of the invention.

The voltage equation of a one phased equivalent circuit of a salient pole synchronous motor is

$$\underline{u}_s = R_s \underline{i}_s + \frac{d}{dt}\underline{\psi}_s + \omega_m \underline{J}\underline{\psi}_s \qquad (1)$$

in which $\underline{u}_s = [u_d \, u_q]^T$ is the motor voltage vector, $\underline{i}_s = [i_d \, i_q]^T$ is the motor current vector, $R_s$ is the stator resistance, $\omega_m$ is the electrical rotational speed of the motor, $\underline{\psi}_s = [\psi_d \, \psi_q]^T$ is stator flux linkage and

$$\underline{J} = \begin{bmatrix} 0 & -1 \\ 1 & 0 \end{bmatrix} \qquad (2)$$

is a transformation matrix which corresponds to imaginary components of complex numbers when matrix algebra is used.

According to flux equation, the stator flux linkage is

$$\underline{\psi}_s = \underline{L}_s \underline{i}_s + \begin{bmatrix} \psi_{pm} & 0 \end{bmatrix}^T \qquad (3)$$

in which

$$\underline{L}_s = \begin{bmatrix} L_d & 0 \\ 0 & L_q \end{bmatrix} \qquad (4)$$

is the stator inductance and $\psi_{pm}$ is the flux linkage induced to the stator windings by permanent magnets of the motor.

The voltage fed to the motor presented in reference frame fixed to stator is

$$\underline{u}_s^s = \underline{T}\underline{u}_s \qquad (5)$$

in which

$$\underline{T} = \cos(\theta_m)\underline{I} + \sin(\theta_m)\underline{J} \tag{6}$$

is the transformation matrix between stator and rotor reference frames and $\theta_m$ is the electrical angular position of the rotor in stator reference frame.

Considering a short-time current change as a function of voltage during a voltage pulse in the stator reference frame. By placing the flux equation (3) to the voltage equation (1) and further by assuming the electrical angular speed to zero and the resistive voltage drop as negligible, one obtains

$$\underline{u}_s = \frac{d}{dt}\left(\underline{L}_s \underline{i}_s + \begin{bmatrix} \psi_{pm} & 0 \end{bmatrix}^T \right). \tag{7}$$

When presented in stator reference frame and supposing the change of magnetic flux linkage from the permanent magnets is zero, equation (7) can be expressed as

$$\underline{u}_s^s = \underline{T}\underline{L}_s \frac{d}{dt}\left(\underline{T}^{-1}\underline{i}_s^s\right). \tag{8}$$

Now supposing the change of rotational angle of the rotor to be zero, the time derivative of the current in the stator reference frame can be expressed as

$$\frac{d}{dt}\underline{i}_s^s = \underline{T}\underline{L}_s^{-1}\underline{T}^{-1}\underline{u}_s^s \tag{9}$$

which can be written as

$$\frac{d}{dt}\underline{i}_s^s = \left( \cos^2(\theta_m)\begin{bmatrix} L_d^{-1} & 0 \\ 0 & L_q^{-1} \end{bmatrix} - \sin^2(\theta_m)\begin{bmatrix} -L_q^{-1} & 0 \\ 0 & -L_d^{-1} \end{bmatrix} \\ + \cos(\theta_m)\sin(\theta_m)\begin{bmatrix} 0 & L_d^{-1}-L_q^{-1} \\ L_d^{-1}-L_q^{-1} & 0 \end{bmatrix} \right)\underline{u}_s^s. \tag{10}$$

The projection of change of current in output phase $\alpha$ is obtained by taking account only the first component of the current vector, that is, by multiplying the above equation from the left side with a vector [1 0]. Further, voltage is fed only to phase $\alpha$, that is

$$\underline{u}_s^s = \begin{bmatrix} u_a & 0 \end{bmatrix}^T. \tag{11}$$

The change of current of phase $\alpha$ is thus

$$\frac{d}{dt}i_a = \left( \cos^2(\theta_m)\begin{bmatrix} L_d^{-1} & 0 \end{bmatrix} + \sin^2(\theta_m)\begin{bmatrix} L_q^{-1} & 0 \end{bmatrix} \\ + \cos(\theta_m)\sin(\theta_m)\begin{bmatrix} 0 & L_d^{-1}-L_q^{-1} \end{bmatrix} \right)\begin{bmatrix} u_a & 0 \end{bmatrix}^T. \tag{12}$$

The inverse value of inductance seen in phase $\alpha$ is the ratio between the change of current and the voltage

$$L_a^{-1} = \frac{1}{u_a}\frac{d}{dt}i_a = \cos^2(\theta_m)L_d^{-1} + \sin^2(\theta_m)L_q^{-1} \qquad (13)$$

which can be written as

$$L_a^{-1} = \frac{1}{2}\left(L_d^{-1} + L_q^{-1}\right) + \frac{1}{2}\cos(2\theta_m)\left(L_d^{-1} - L_q^{-1}\right). \qquad (14)$$

More generally, the inverse value of inductance sensed in angle $\theta$ can be presented as

$$L^{-1} = \frac{1}{2}\left(L_d^{-1} + L_q^{-1}\right) + \frac{1}{2}\cos(2\theta - 2\theta_m)\left(L_d^{-1} - L_q^{-1}\right) \qquad (15)$$

According to the above equation (15), the inverse value of the inductance varies sinusoidally and has inverse values of synchronous inductances as minimum and maximum values.

In the present invention a voltage pulse is provided with a known magnitude to each phase of the salient pole synchronous machine using the frequency converter. The output phases of the frequency converter are connected to the salient pole synchronous machine such that the frequency converter can be used for feeding the voltage pulses to the machine.

When the provided voltage pulse has ended, the current is measured using the current measurement provided in the intermediate voltage circuit of the frequency converter. Thus after each voltage pulse or at the end of the voltage pulse, the resulting current is measured. The current that is measured represents a component of current that is in the direction of the voltage.

For each provided voltage pulse, the inverse value of the inductance is calculated as the measured current divided by the magnitude of the voltage and the duration of the pulse. The magnitude of the voltage pulse is preferably the voltage of the DC intermediate circuit and the value of which is readily known in the frequency converter.

After the inverse values of inductances are calculated, the synchronous inductances of the machine are solved from the calculated values. The synchronous inductances are solved for example by fitting a sinusoidally varying waveform to the calculated inverse values. The maximum and minimum values of the sinusoidal waveform represent the inverse values of the synchronous inductances of the machine. The synchronous inductances can also be solved from the calculated inverse values of inductances using discrete Fourier algorithms.

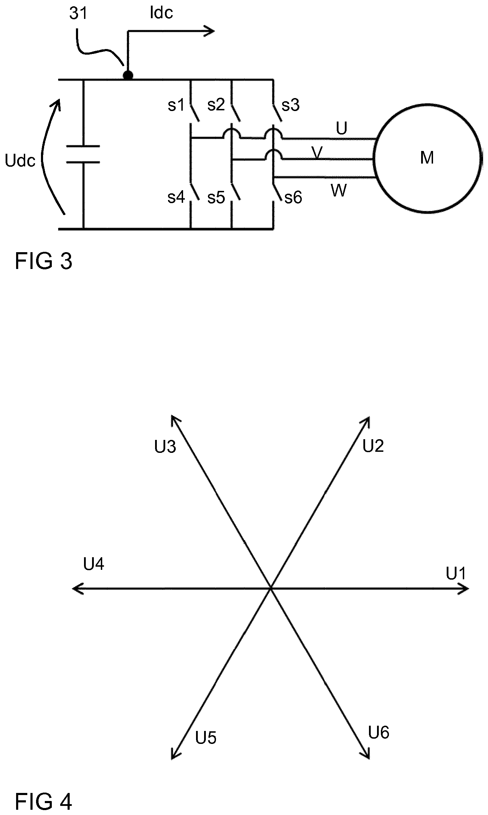

Figure 3 shows a simplified structure of a three-phase inverter of a frequency converter and the load connected to the output phases. The frequency converter is equipped with a current measurement sensor 31 in the intermediate voltage circuit.

In the method of the present invention voltage pulses are produced or generated with the frequency converter to the salient pole synchronous machine. With reference to Figure 3, the voltage pulses are produced by selecting suitable switch combinations using the output switches s1-s6 of the frequency converter. The voltage pulses are produced to each output phase of the frequency converter and thus to each phase of the connected machine. For example, by closing switches s1, s5 and s6 a voltage pulse is generated to output phase U and the magnitude of the voltage pulse is the voltage of the intermediate voltage circuit Udc. With the six output switches six different active combinations of the switch states is obtained. These switch combinations are presented in Figure 4 as voltage vectors in which the above mentioned switch combination corresponds to vector U1.

In the method voltage pulses are produced to each phase of the machine. This means that voltage vectors U1 to U6 are generated. As six voltage pulses are produced, these include a positive and a negative pulse for each phase.

The pulses are preferably produced in an order that minimizes the possibility of rotating the rotor of the machine. Presented in vectors shown in Figure 4, such an order is, for example, U1, U4, U2, U5, U3, U6. The consecutive voltage vectors are selected to be in as opposite direction as possible so that the produced voltages are not able to produce a rotating magnetic flux in the machine which could rotate the rotor of the machine.

When a voltage pulse has been active for a certain period of time, the current is measured in the intermediate circuit. The current measurement can also be made such that after a predetermined time from the beginning of the voltage pulse, the current is measured. The current measurement is thus carried out at a predetermined time instant from the start of the voltage pulse. The predetermined time is the same for all pulse tests in the measurement sequence.

When the current is measured, the inverse value of the inductance is determined using equation (13). The inverse values of inductance are calculated similarly for all voltage pulses. In equation (13) the current $i_a$ is substituted with the measured current Idc and voltage $u_a$ is substituted with the value of DC voltage. As the current starts from zero, the change of current in equation (13) corresponds to the final value of the current and the value of $dt$ corresponds to the time period from the beginning of the voltage pulse to the instant the current is measured. Preferably, the durations of the pulses are equal for each pulse.

When inverse values are calculated with every voltage pulse, a set of inverse values of inductances are obtained. Equation (15) shows that the inverse value of inductance varies sinusoidally as a function of the voltage angle. The calculated inverse values are single points of the waveform. When equation (15) is fitted to the calculated values, the maximum and minimum values of the waveform represent the inverse values of synchronous inductances. The fitting of equation (15) is carried out by changing values of $L_d$, $L_q$ and $\theta_m$. The sinusoidal waveform can also be solved using discrete Fourier transformation. When using Fourier methods in solving the parameters, the calculated inverse values of inductances are considered as discrete samples and based on these samples the required properties of the waveform can be solved.

Figure 2 shows an example of the sinusoidal waveform according to equation (15) together with calculated inverse values of inductances as dots. The calculated values are calculated in angles corresponding to the voltage vectors shown in Figure 4, and thus in direction of each output phase of the inverter. Figure 2 also shows that the rotor angle $\theta_m$ is 30 degrees as the phase of the waveform is shifted by that amount. It can be seen, that in the example of Figure 2 the inverse value of inductance has the maximum value of 5 p.u. and the minimum value of 2,5 p.u. and thereby the synchronous inductances are $L_d$ = 0,2 p.u. and $L_q$ = 0,4 p.u.

The synchronous inductances obtained with the invention represent the synchronous direct axis inductance $L_d$ and the synchronous quadrature axis inductance $L_q$. As in the example the synchronous quadrature axis inductance is higher than the direct axis inductance, the machine is a permanent magnet synchronous machine. In case of a synchronous reluctance machines, the synchronous direct axis inductance $L_d$ is higher than the quadrature axis inductance $L_q$.

In addition to the synchronous inductances, the method provides also the angle of the rotor of a synchronous reluctance machine. The information of the angle can be used in the starting of the machine for making the start more fluent. In connection with a permanent magnet synchronous machine, the method is able to produce information on the direction of the magnetic axis of the rotor. Once the synchronous inductances are determined according to the invention, the values are stored in the frequency converter in which the values are used in control of the machine. In the above, the salient pole synchronous machine is generally referred to as a motor or a machine. It is known to a skilled person, that the machine may be implemented as a generator or as a motor. Both in connection with a motor or a generator, the synchronous inductances are needed in reliable control of the machine.

A frequency converter of the present invention comprises a current measurement in the intermediate voltage circuit and has output connections for connecting to a salient pole synchronous machine. The frequency converter further comprises means that are configured to identify the synchronous inductances of the salient pole machine by providing a voltage pulse with a known magnitude to each phase of the salient pole synchronous machine with the frequency converter, measuring the current in the intermediate voltage circuit at the end of each voltage pulse, calculating for each provided voltage pulse the inverse value of inductance as the measured current divided by the magnitude of the voltage and by duration of the voltage pulse, and solving the synchronous inductances from the calculated inverse values of inductances.

For the identifying of the inductances, the frequency converter is programmed to produce a certain procedure. In the procedure a controller or a processor provides instructions for producing the voltage pulses and for measuring the current. Further, the controller or the processor calculates the inverse value and solves the synchronous inductances from the calculated inverse values of inductances.

The invention can be implemented in existing frequency converters. Present frequency converters comprise processors and memory that can be utilized in the functions according to embodiments of the invention. Thus, all modifications and configurations required for implementing an embodiment of the invention may be performed as software routines, which may be implemented as added or updated software routines. If the functionality of the invention is implemented by software, such software can be provided as a computer program product comprising computer program code which, when run on a computer, causes the computer or corresponding arrangement to perform the functionality according to the invention as described above. Such a computer program code may be stored or generally embodied on a computer readable medium, such as suitable memory, e.g. a flash memory or a disc memory from which it is loadable to the unit or units executing the program code. In addition, such a computer program code implementing the invention may be loaded to the unit or units executing the computer program code via a suitable data network, for example, and it may replace or update a possibly existing program code.

**Claims**

1. A method of identifying synchronous inductances of a salient pole synchronous machine connected to a frequency converter having a current measurement in the intermediate voltage circuit, the method comprising

   providing a voltage pulse with a known magnitude to each phase of the salient pole synchronous machine with the frequency converter,
   measuring the current in the intermediate voltage circuit at the end of each voltage pulse,
   calculating for each provided voltage pulse the inverse value of inductance as the measured current divided by the magnitude of the voltage and by duration of the voltage pulse, **characterised by**
   solving the synchronous inductances from the calculated inverse values of inductances, wherein the solving of the synchronous inductances comprises either
   fitting a sinusoidally varying waveform to the calculated inverse values of inductance, wherein the maximum and minimum values of the fitted sinusoidally varying waveform represent the inverse values of synchronous inductances, or
   performing a discrete Fourier transformation on the calculated inverse values of inductances for obtaining a minimum and maximum values of a sinusoidally varying waveform, the minimum and the maximum values representing the inverse values of synchronous inductances, and
   calculating inverse values of the inverse values of synchronous inductances for obtaining values of synchronous inductances.

2. A method according to claim 1, wherein the synchronous inductances are further stored to the frequency converter.

3. A method according to claim 1 or 2, wherein the voltage pulses are provided in an order minimizing the possibility of rotating the rotor of the salient pole synchronous machine.

4. A method according to anyone of the previous claims 1 to 3, wherein the salient pole synchronous machine is a permanent magnet synchronous motor or a synchronous reluctance motor.

5. A frequency converter having a current measurement in the intermediate voltage circuit and adapted to be connected to a salient pole synchronous machine, the frequency converter comprising means configured to identify synchronous inductances of the salient pole synchronous machine by
   providing a voltage pulse with a known magnitude to each phase of the salient pole synchronous machine with the frequency converter,
   measuring the current in the intermediate voltage circuit at the end of each voltage pulse,
   calculating for each provided voltage pulse the inverse value of inductance as the measured current divided by the magnitude of the voltage and by duration of the voltage pulse, **characterised by**
   solving the synchronous inductances from the calculated inverse values of inductances either
   by fitting a sinusoidally varying waveform to the calculated inverse values of inductance, wherein the maximum and minimum values of the fitted sinusoidally varying waveform represent the inverse values of synchronous inductances, or
   by performing a discrete Fourier transformation on the calculated inverse values of inductances for obtaining a minimum and maximum values of a sinusoidally varying waveform, the minimum and the maximum values representing the inverse values of synchronous inductances.

6. A computer program product comprising computer program code, wherein the execution of the program code in a computer of a frequency converter according to claim 5 causes the computer to carry out the steps of the method according to any one of claims 1 to 4.

**Patentansprüche**

1. Verfahren zum Identifizieren von Synchroninduktanzen einer mit einem Frequenzwandler verbundenen Schenkelpol-Synchronmaschine, die eine Strommessung in dem Zwischenspannungskreis aufweist, wobei das Verfahren Folgendes umfasst:

   Zuführen eines Spannungspulses mit einer bekannten Stärke zu jeder Phase der Schenkelpol-Synchronmaschine mit dem Frequenzwandler,
   Messen des Stroms in dem Zwischenspannungskreis an dem Ende von jedem Spannungspuls,

Berechnen für jeden zugeführten Spannungspuls des Induktanzinverswerts als der gemessene Strom geteilt durch die Stärke der Spannung und durch die Dauer des Spannungspulses,

**gekennzeichnet durch**

Lösen der Synchroninduktanzen aus den berechneten Induktanzinverswerten, wobei das Lösen der Synchroninduktanzen Folgendes umfasst: entweder Anpassen einer sinusförmig variierenden Wellenform an die berechneten Induktanzinverswerte, wobei der Maximal- und der Minimalwert der angepassten sinusförmig variierenden Wellenform die Inverswerte von Synchroninduktanzen repräsentieren, oder

Durchführen einer Diskrete-Fourier-Transformation an den berechneten Induktanzinverswerten zum Erhalten eines Minimal- und eines Maximalwerts einer sinusförmig variierenden Wellenform, wobei der Minimal- und der Maximalwert die Inverswerte von Synchroninduktanzen repräsentieren, und

Berechnen von Inverswerten der Inverswerte von Synchroninduktanzen, um Werte von Synchroninduktanzen zu erhalten.

2. Verfahren nach Anspruch 1, wobei die Synchroninduktanzen ferner in dem Frequenzwandler gespeichert werden.

3. Verfahren nach Anspruch 1 oder 2, wobei die Spannungspulse in einer Reihenfolge zugeführt werden, die die Möglichkeit eines Verdrehens des Rotors der Schenkelpol-Synchronmaschine minimiert.

4. Verfahren nach einem der vorhergehenden Ansprüche 1 bis 3, wobei die Schenkelpol-Synchronmaschine ein Permanentmagnet-Synchronmotor oder ein Synchron-Reluktanzmotor ist.

5. Frequenzwandler, der eine Strommessung in dem Zwischenspannungskreis aufweist und dafür eingerichtet ist, mit einer Schenkelpol-Synchronmaschine verbunden zu werden, wobei der Frequenzwandler Mittel umfasst, die ausgelegt sind zum Identifizieren von Synchroninduktanzen der Schenkelpol-Synchronmaschine durch

Zuführen eines Spannungspulses mit einer bekannten Stärke zu jeder Phase der Schenkelpol-Synchronmaschine mit dem Frequenzwandler,

Messen des Stroms in dem Zwischenspannungskreis an dem Ende von jedem Spannungspuls,

Berechnen für jeden zugeführten Spannungspuls des Induktanzinverswerts als der gemessene Strom geteilt durch die Stärke der Spannung und durch die Dauer des Spannungspulses,

**gekennzeichnet durch**

Lösen der Synchroninduktanzen aus den berechneten Induktanzinverswerten, entweder

durch Anpassen einer sinusförmig variierenden Wellenform an die berechneten Induktanzinverswerte, wobei der Maximal- und der Minimalwert der angepassten sinusförmig variierenden Wellenform die Inverswerte von Synchroninduktanzen repräsentieren, oder

durch Durchführen einer Diskrete-Fourier-Transformation an den berechneten Induktanzinverswerten zum Erhalten eines Minimal- und eines Maximalwerts einer sinusförmig variierenden Wellenform, wobei der Minimal- und der Maximalwert die Inverswerte von Synchroninduktanzen repräsentieren.

6. Computerprogrammprodukt, das Computerprogrammcode umfasst, wobei die Ausführung des Programmcodes in einem Computer eines Frequenzwandlers nach Anspruch 5 den Computer zum Ausführen der Schritte des Verfahrens nach einem der Ansprüche 1 bis 4 veranlasst.

**Revendications**

1. Procédé d'identification des inductances synchrones d'une machine synchrone à pôles saillants connectée à un convertisseur de fréquence ayant une mesure de courant dans le circuit de tension intermédiaire, le procédé comprenant les étapes suivantes :

fournir une impulsion de tension avec une amplitude connue à chaque phase de la machine synchrone à pôles saillants avec le convertisseur de fréquence,

mesurer le courant dans le circuit de tension intermédiaire à la fin de chaque impulsion de tension, calculer, pour chaque impulsion de tension fournie, la valeur inverse de l'inductance en divisant le courant mesuré par l'amplitude de la tension et par la durée de l'impulsion de tension,

le procédé étant **caractérisé par** :

la résolution des inductances synchrones à partir des valeurs inverses calculées des inductances, où la résolution des inductances synchrones comprend soit :

l'adaptation d'une forme d'onde variant de manière sinusoïdale aux valeurs inverses calculées de l'inductance, où les valeurs maximale et minimale de la forme d'onde variant de manière sinusoïdale adaptée représentent les valeurs inverses des inductances synchrones, soit

la réalisation d'une transformation de Fourier discrète sur les valeurs inverses calculées des inductances pour obtenir des valeurs minimale et maximale d'une forme d'onde variant de manière sinusoïdale, les valeurs minimale et maximale représentant les valeurs inverses des inductances synchrones, et

le calcul de l'inverse des valeurs inverses des inductances synchrones pour obtenir les valeurs des inductances synchrones.

2. Procédé selon la revendication 1, dans lequel les inductances synchrones sont en outre stockées dans le convertisseur de fréquence.

3. Procédé selon la revendication 1 ou la revendication 2, dans lequel les impulsions de tension sont fournies dans un ordre minimisant la possibilité de faire tourner le rotor de la machine synchrone à pôles saillants.

4. Procédé selon l'une quelconque des revendications précédentes 1 à 3, dans lequel la machine synchrone à pôles saillants est un moteur synchrone à aimant permanent ou un moteur à réluctance synchrone.

5. Convertisseur de fréquence ayant une mesure de courant dans le circuit de tension intermédiaire et adapté pour être connecté à une machine synchrone à pôles saillants, le convertisseur de fréquence comprenant des moyens configurés pour identifier les inductances synchrones de la machine synchrone à pôles saillants en :

fournissant une impulsion de tension avec une amplitude connue à chaque phase de la machine synchrone à pôles saillants avec le convertisseur de fréquence,

mesurant le courant dans le circuit de tension intermédiaire à la fin de chaque impulsion de tension, calculant, pour chaque impulsion de tension fournie, la valeur inverse de l'inductance en divisant le courant mesuré par l'amplitude de la tension et par la durée de l'impulsion de tension,

**caractérisé par** :

la résolution des inductances synchrones à partir des valeurs inverses calculées des inductances, soit en adaptant une forme d'onde variant de manière sinusoïdale aux valeurs inverses calculées de l'inductance, où les valeurs maximale et minimale de la forme d'onde variant de manière sinusoïdale adaptée représentent les valeurs inverses des inductances synchrones, soit

en réalisant une transformation de Fourier discrète sur les valeurs inverses calculées des inductances pour obtenir des valeurs minimale et maximale d'une forme d'onde variant de manière sinusoïdale, les valeurs minimale et maximale représentant les valeurs inverses des inductances synchrones.

6. Produit programme informatique comprenant un code de programme informatique, dans lequel l'exécution du code de programme dans un ordinateur d'un convertisseur de fréquence selon la revendication 5 amène l'ordinateur à exécuter les étapes du procédé selon l'une quelconque des revendications 1 à 4.

FIG 1

FIG 2

FIG 3

FIG 4

**EP 3 220 535 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140084822 A1
- WO 2004023639 A1